# EUROPEAN PATENT SPECIFICATION

(11) **EP 3 426 877 B1**
(45) Date of publication and mention of the grant of the patent: **05.07.2023**
(21) Application number: 17706490.4
(22) Date of filing: 22.02.2017
(51) Int. Cl.: E21B 29/00

(54) **TUBULAR CUTTING DEVICE**
RÖHRENSCHNEIDVORRICHTUNG
DISPOSITIF DE DÉCOUPE TUBULAIRE

(30) Priority: 07.03.2016 GB 201603901
(43) Date of publication of application: 16.01.2019
(73) Proprietor: YTA B.V., 4814 DB Breda (NL)
(72) Inventor: HEIJNEN, Wilhelmus Hubertus Paulus Maria, 55442 Stromberg (DE); PETERS, Robert Bouke, 2251 MT Voorschoten (NL)
(74) Representative: Blumbach · Zinngrebe Patentanwälte PartG mbB
(86) International application number: PCT/EP2017/054031
(87) International publication number: WO 2017/153168

(56) References cited:
- EP-A1- 2 329 903
- EP-A1- 2 813 665
- EP-A1- 3 070 259
- EP-A2- 0 288 288
- GB-A- 2 448 919
- US-A- 3 293 963
- US-A- 4 369 573
- US-A1- 2002 150 436
- US-B2- 7 575 056

## Description

### Field of the invention

The invention relates to a tubular cutting device for cutting a tubular structure. The invention further relates to a cutting method for cutting a tubular structure.

### Background and summary of the invention

Tubular cutting devices are tools for being inserted into the hollow space of a tubular structure in order to cut or sever the tubular from within its hollow space. This approach is of interest for cutting tubular structures at their inner surface, in particular for severing tubular members which are difficult or impossible to access from the outside.

A typical field of application for tubular cutting devices is the petroleum and natural gas extraction, where pipes of vast length are used deep under the ground. Examples are wellbore casings or liners, downhole tubings, drill pipes, supporting pipes or any other tubular elements introduced into a wellbore. Such tubular members are often permanently installed onsite, for example cemented into place within the borehole, such as the casing. In other cases, it may happen that tubular members get unintentionally stuck within the wellbore, such as drill pipes.

To remove tubular members fixed in a wellbore, whether for replacement, demolishment, retrieval or other needs, a tubular cutting device can be introduced into the tubular cavity, positioned at a desired location along the length of the tubular structure and controlled to extend a cutting blade to cut the circumjacent tube wall.

The US 7 575 056 B2 discloses a pipe cutter for severing downhole tubulars comprising a main motor connected to a drive shaft, which is, in turn, coupled to both a cutting head and a cutting member. The cutting member is coupled with a pivoting mechanism. The drive system comprises the main motor, the drive shaft as well as gear trains for both the cutting head and the cutting member.

Generally, all parts of the drive system of a tubular cutter may represent sources of error, in particular since operation of such devices typically takes place within a demanding environment of wellbore fluids or mixtures of fluids and solid particles, such as cutting residues, soil or other debris. Therefore, it would be desirable to reduce the possibility of error within the drive system to a minimum.

Particularly critical is a situation in which the cutting blade gets stuck in the pipe wall during the cutting process. Such an accident can result in loss of the cutting device and lead to failure of the entire downhole operation. A situation of a stuck cutting blade can in particular occur when the tubular member is under stress. Compressive stress along the longitudinal direction of a vertically extending tubular member often emerges due to the deadweight of the tubular member itself. Stress within a tubular structure can cause the cutting groove to narrow more and more, the further the saw blade penetrates into the material, finally causing the cutting blade to be wedged within the cutting groove. Therefore, it would be desirable to minimize the risk of the cutting blade to get stuck.

Furthermore, cutting residues may cause problems or inefficiencies, for example when becoming trapped in the cutting groove or between the saw teeth. The US 2014/0138091 A1 discloses a pipe cutter with an impeller operably associated with the cutting blade to create fluid flow and turbulence proximate a cut being made. The US 2014/0138083 A1 describes a cutter with a fluid jet generator that creates and projects a jet of fluid proximate the cut being made. These designs, however, are relatively complex.

European Patent Application EP 2 813 665 A1 shows a downhole machining system for machining a casing in a borehole, which is, for making holes sideways of a downhole main tubing.

United States Patent 3 293 963 shows a pipe cutter. Wedges are introduced in a slit in the pipe in order to prevent, that the upper part falls onto the lower part when the pipe is cut through.

UK Patent Application 2 448 919 A shows an apparatus for cutting through a pipe wall under water using a toothed disc-like blade. The cutting head makes one revolution to cut right through the pipe wall. Wedges are fired into the cut to keep the cut open.

U.S. Patent Application Publication US 2002/0150436 A1 shows a tubular cutting tool capable of compensating for variations in the internal radii of the tubular to be cut.

European Patent Application EP 0 288 288 A2 shows a pipe cutting tool with a cutting disc to cut a pipe. No preventive step is discussed for the cutting disc not to be stuck in the slit cut by the cutting disc.

United States Patent 4 369 573 shows a pipe cutter for cutting the wall of a pipe from within the bore of the pipe. The tool is open-constructed and not suitable for the use in a well bore.

European Patent Application EP 2 329 903 A1 shows a tube cutting method and a tube cutting device to cut pipes of a very small diameter in the range of 1 to 3 millimeters. The cutting step is performed in horizontal orientation, so that the cutting knife 7 doesn't get stuck. This assembly is useless and gets stuck when the weight of a tube sits on the slit, which is cut by the cutting device itself.

An object of the invention is to provide a tubular cutting device having a drive system with minimized susceptibility to failure, in particular due to ambient influences.

An aspect of the object of the invention is to provide a tubular cutting device with a minimized risk of the cutting blade to get stuck in the tubular structure during cutting, in particular for tubular structures being under stress.

Another aspect of the object of the invention is to provide a tubular cutting device promoting cutting residues to be flushed away from the cutting region.

The object of the invention is achieved by subject matter of the independent claims. Preferred embodiments of the invention are subject of the dependent claims.

### Brief description of the figures

The invention is described in more detail and in view of a preferred embodiment hereinafter. Reference is made to the attached drawings, wherein like numerals have been applied to like or similar components. It is shown in:
- Fig. 1: a three-dimensional overview of a tubular cutting device;
- Fig. 2: a cross-sectional overview of the tubular cutting device in Fig. 1;
- Fig. 3: a cross-sectional view of the cutting unit in Fig. 1 (a) with retracted cutting member and (b) with outwardly advanced cutting member;
- Fig. 4: a cross-sectional view along the line B-B in Fig. 3 of the cutting unit (a) with retracted cutting member and (b) with outwardly advanced cutting member;
- Fig. 5: a cross-sectional view along the line C-C in Fig. 3 of the cutting unit (a) with retracted cutting member and (b) with outwardly advanced cutting member;
- Fig. 6: a cross-sectional view along the line D-D in Fig. 3 of the cutting unit (a) with retracted cutting member and (b) with outwardly advanced cutting member;
- Fig. 7: a cross-sectional view along the line E-E in Fig. 3 of the cutting unit (a) with retracted cutting member and (b) with outwardly advanced cutting member;
- Fig. 8: a cross-sectional view along the line F-F in Fig. 3 of the cutting unit (a) with retracted cutting member and (b) with outwardly advanced cutting member;
- Fig. 9: a cross-sectional view along the line G-G in Fig. 3 of the cutting unit (a) with retracted cutting member and (b) with outwardly advanced cutting member;
- Fig. 10: a cross-sectional view of the driving section in Fig. 1 of the tubular cutting device;
- Fig. 11: a cross-sectional view along the line B-B in Fig. 10 of the driving section of the tubular cutting device;
- Fig. 12: a cross-sectional view along the line C-C in Fig. 10 of the driving section of the tubular cutting device;
- Fig. 13: a cross-sectional view along the line D-D in Fig. 10 of the driving section of the tubular cutting device;
- Fig. 14: a cross-sectional view along the line E-E in Fig. 10 of the driving section of the tubular cutting device;
- Fig. 15: a cross-sectional view along the line F-F in Fig. 10 of the driving section of the tubular cutting device;
- Fig. 16: a three-dimensional view of the anchoring section in Fig. 1 of the tubular cutting device;
- Fig. 17: a cross-sectional view of the anchoring section in Fig. 16 of the tubular cutting device;
- Fig. 18: a cross-sectional view along the line B-B in Fig. 17 of the anchoring section of the tubular cutting device.

### Detailed description of an embodiment of the invention

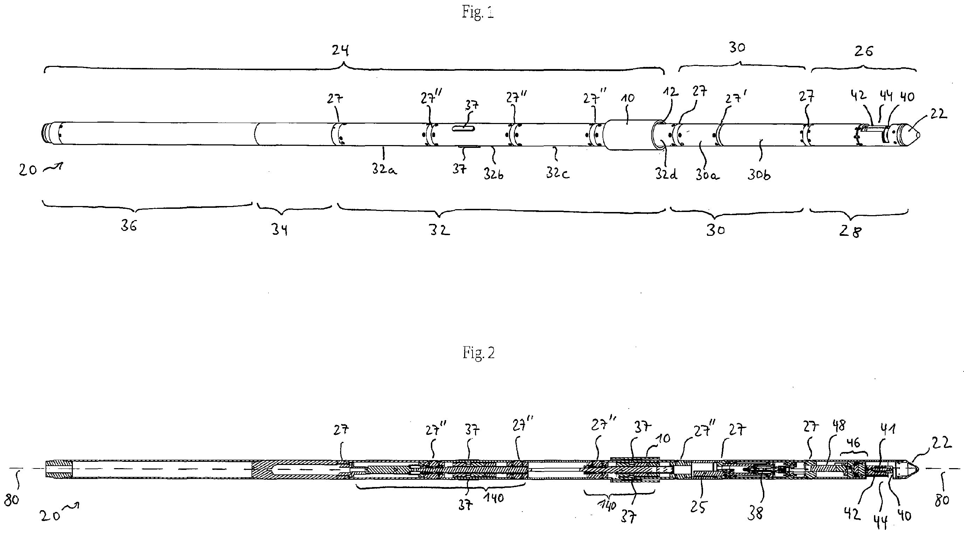

Referring to Figs. 1 and 2, a tubular cutting device 20 is formed as a cylindrical elongated rod with a conical tip 22. The tubular cutting device 20 is insertable into a tubular structure 10, which is only partially shown here for clarity. When inserted, the tubular cutting device 20 extends along the inner hollow space 12 of the tubular structure 10. The tubular structure 10 may be a pipe, for example a steel pipe, such as a casing or liner, which may extend vertically and/or horizontally within a wellbore for hydrocarbon exploration.

The tubular cutting device 20, which thus forms a downhole tool, comprises a device body 24, a cutting unit 26 and a driving section 30 for driving the cutting unit 26 and connecting the device body 24 with the cutting unit 26. The cutting unit 26 is formed as a cutting head and is positioned at the front of the tubular cutting device 20. By means of the driving section 30, to which the cutting unit 26 is rotatably attached, the cutting unit 26 can be driven to rotate with respect to the device body 24. Thereby, the cutting unit 26 is drivable to rotate with respect to the circumjacent tubular structure 10.

The tubular cutting device 20 defines a longitudinal axis 80 and comprises multiple sections 28, 30, 32, 34, 36 arranged side by side along the longitudinal axis. A section may comprise multiple segments 30a, 30b, 32a, 32b, 32c, 32d. Adjacent sections or segments are coupled to one another, in this example by couplings 27, 27', 27".

Starting from the front tip 22, the tubular cutting device 20 comprises a cutting section 28 which forms the cutting unit 26. Adjacent to the cutting unit 26, i.e. adjacent to the cutting section 28, the driving section 30 for driving the cutting unit 26 is arranged. The driving section 30 comprises segments 30a, 30b, which are coupled by a coupling 27'. Adjacent to the driving section 30, an anchoring section 32 is located, which allows for temporarily anchoring the tubular cutting device 20 to the tubular structure 10. The anchoring section 32 comprises multiple segments 32a, 32b, 32c, 32d, which are coupled by couplings 27". The tubular cutting device 20 may optionally comprise further sections 34, 36, which may for example accommodate electronics.

In this case, the device body 24 comprises the rear sections 32, 34, 36, which are rotationally fixedly coupled to one another. More generally, it is preferable that the device body 24 comprises at least the anchoring section 32.

In the anchoring section 32, the tubular cutting device 20 has an anchoring mechanism 140, which comprises clamping jaws 37 for anchoring the tubular cutting device 20 to the tubular structure 10. When the tubular cutting device 20 is anchored, the device body 24 is locked against rotational and longitudinal movement with respect to the tubular structure 10.

In the driving section 30, the device body 24 comprises a first motor unit 25 for rotating the cutting unit 26 with respect to the device body 24. Thereby, the cutting unit 26 can be rotated relative to the tubular structure 10, the device body 24 is anchored to. As an example, the rotation speed can be 30 to 60 revolutions per minute. The driving section 30 further accommodates a rotary electrical feedthrough 38 for supplying the cutting unit 26 with electricity and/or control signals.

The cutting unit 26 comprises a cutting member 40 formed as a cutting blade. The cutting member 40 is drivable by a second motor unit 41, which is accommodated in the cutting unit 26 and supplied with electricity from the device body 24 by means of the rotary electrical feedthrough 38. The cutting member 40 is rotatably attached to a pivoting arm 42. The pivoting arm 42, along with the cutting member 40, is pivotable about a pivoting axis 43, which is parallel offset to the longitudinal axis 80, radially outwardly through an opening 44 within the housing 45 of the cutting unit 26. To this end, the cutting unit comprises a radial advancing mechanism 46 drivable by a third motor unit 48, which also is accommodated in the cutting unit 26. By pivoting the cutting member 40, the cutting member 40 can be brought into cutting contact with the circumjacent tubular structure 10. Due to the rotation of the cutting unit 26, the tubular structure 10 can be circumferentially cut.

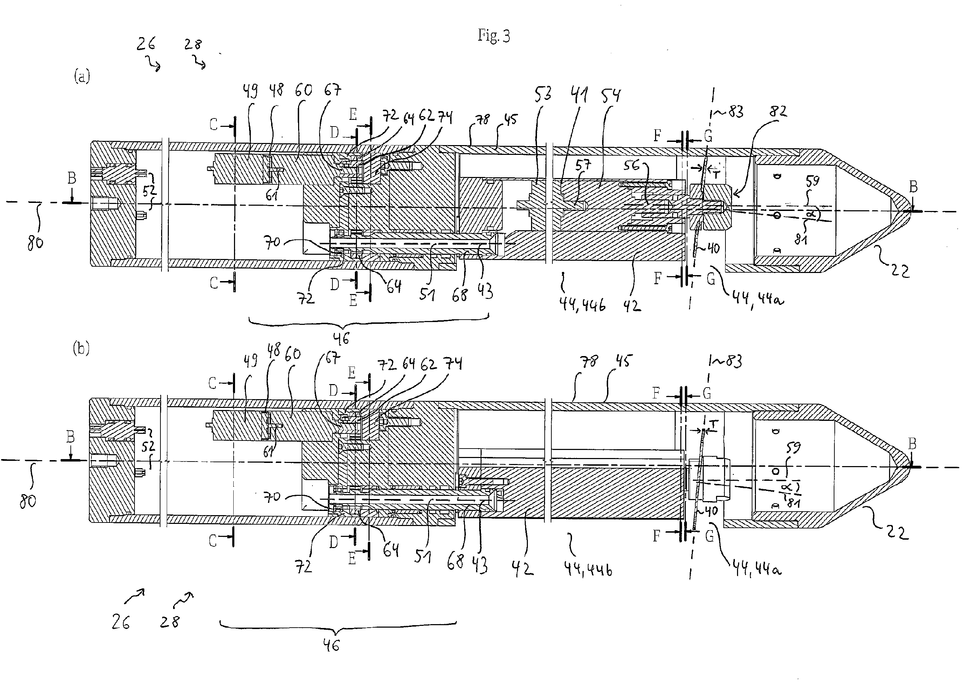

Referring to Figs. 3 to 9, the cutting unit 26 is formed as a bullet-shaped tool with a conical tip 22. The cutting unit 26, together with the driving section 30, may be modularly attached to different device bodies 24.

The cutting unit 26 comprises a cutting member 40 which is formed as a saw blade. The cutting member 40 is driven by the second motor unit 41, which, in this case, comprises an electric motor 53 and a gearing 54, wherein the gearing 54 is directly mounted on the motor shaft 57 and may for example be a planetary gear. The second motor unit 41 is located adjacent to the cutting member 40 and directly drives the cutting member 40. The second motor unit 41 obtains electrical power from the device body 24 of the tubular cutting device 20. To this end, an electric cable may be led through a cable channel 51 and connected to connectors 52.

The cutting member 40 is rotatably mounted to a pivoting arm 42. In this case, the cutting member 40 is mounted on the output shaft 56 of the second motor unit 41, such that the output shaft 56 defines the rotation axis 59 of the cutting member 40, and the second motor unit 41 is mounted to the pivoting arm 42. The pivoting arm 42 can be pivoted radially outwardly from the cutting unit 26 by means of a radial advancing mechanism 46. Thus, the radial advancing mechanism 46 defines a retracted position, as shown in figure parts (a) of Figs. 3 to 9, as well as a radially outwardly advanced position of the cutting member 40, as shown in figure parts (b) of Figs. 3 to 9.

In this embodiment, the radial advancing mechanism 46 is formed as a pivoting mechanism. The pivoting mechanism is driven by a third motor unit 48, which, again, comprises an electric motor 49 and an attached gearing 60 mounted on the motor shaft 61, wherein the gearing 60 may be a planetary gear. The third motor unit 48 is fixedly attached at the cutting unit 26 and obtains, similar as the second motor unit 41, electrical power from the device body 24 via the connectors 52.

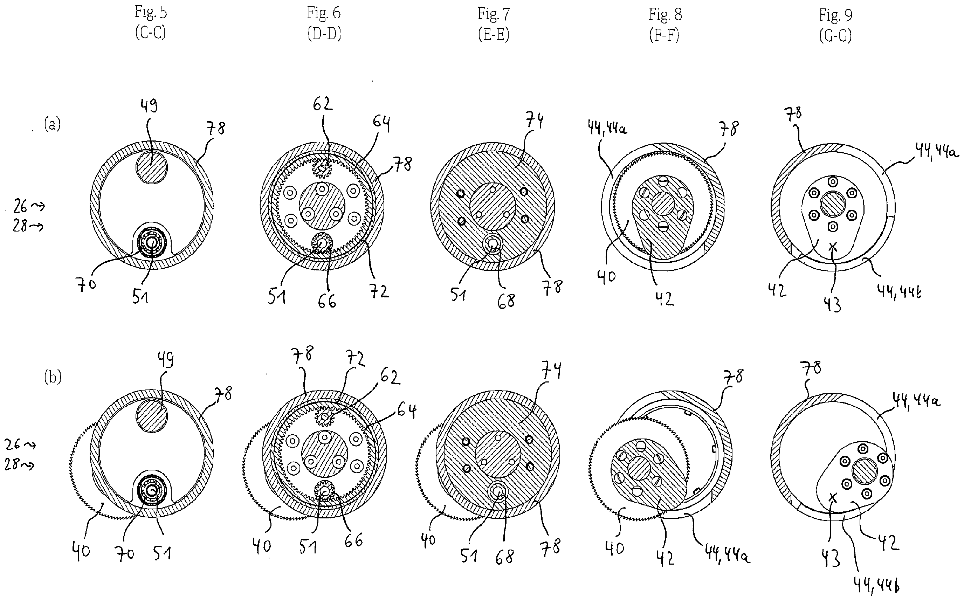

For driving the radial advancing mechanism 46, a gear 62 is seated on the output shaft 67 of the third motor 48 unit and is engaging with a hollow gear rim 64 with internal teeth, wherein the gear rim 64, in turn, engages with another gear 66 fixedly mounted on a pivoting shaft 68 concentric to the pivoting axis 43 (see section D-D in Fig. 6). The acentric pivoting shaft 68 is fixedly connected to the pivoting arm 42. In this way, the third motor 48 unit both rotates the pivoting shaft 68 and pivotes the pivoting arm 42 radially outwardly from the cutting unit 26. The gear rim 64 is circumferentially supported in a slide bearing 72 (see section D-D in Fig. 6) and axially supported with a slide disc 74 (see section E-E in Fig.7).

The pivoting shaft 68, which is formed as a hollow shaft to form the cable channel 51, is rotatably mounted in the cutting unit 26, in this case with a ball bearing 70 (see section C-C in Fig. 5).

In the retracted position of the cutting member 40 (figure parts (a) of Figs. 3 to 9), the cutting member 40 is completely located inside the cutting unit 26, while in the radially outwardly advanced position (figure parts (b) of Figs. 3 to 9), the cutting member 40 is radially moved partially outside the housing 45 of cutting unit 26. Therefore, the circumferential tubular wall 78 of the housing 45 of the cutting unit 26 includes an opening 44 through which the cutting member 40 can be moved out by the radial advancing mechanism 46.

The opening 44 comprises a first region 44a for the cutting member 40 and a second region 44b for the pivoting arm 42, wherein the first region 44a has an angular extension of more than 180 degrees (see section F-F in Fig. 8), while the second region 44b has an angular extension of more than 90 and less than 180 degrees (see section G-G in Fig. 8). The second region 44b of the opening 44 allows the pivoting arm 42 to extend radially outwardly of the cutting unit 26. This allows for a wide pivoting. In other words, in the radial outermost position of the cutting member 40, the pivoting arm 42 is located partially outside the circumferential tubular wall 78 of the housing 45 of the cutting unit 26.

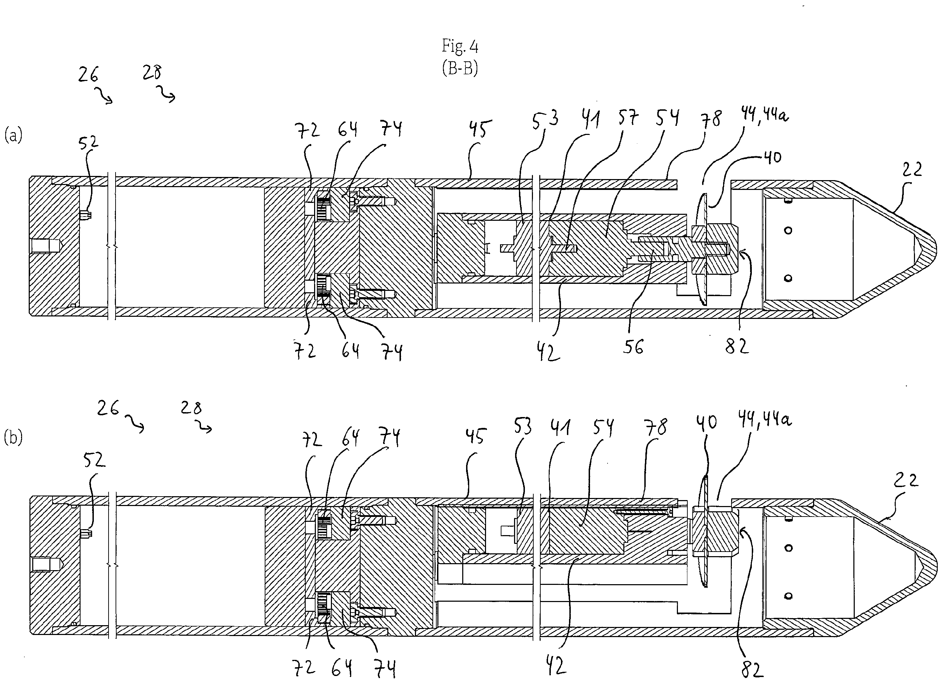

As is shown in Figs. 3 and 4 in an exaggerated manner, the normal 81 of the plane 83 of the cutting member 40 is inclined with respect to the longitudinal axis 80 of the cutting unit 26, wherein the inclination angle α in this example is 1 degree.

In the illustrated embodiment of the invention, the rotation axis 59 of the cutting member is parallel to the longitudinal axis 80. Hence, the normal 81 of the plane 83 of the cutting member 40 is inclined with respect to the rotation axis 59 of the cutting member 40. This results in a wobbling motion of the cutting member 40, when rotating. It is noted, however, that other embodiments of the invention may provide a rotation axis 59 of the cutting member 40 which is not parallel but inclined with respect to the longitudinal axis 80 of the cutting unit 26. Then, the normal 81 of the plane 83 of the cutting member 40 may (but need not) be parallel to the rotation axis 59 of the cutting member 40.

Due to the inclination of the cutting member 40 a cutting groove can be cut which is wider than the thickness T of the cutting member 40, which can prevent the cutting member 40 to get stuck within the circumjacent tubular structure 10, when the cutting groove is successively compressed during the cutting operation due to stress of the tubular structure 10. Moreover, flow components along the longitudinal axis 80 may be induced within the fluid accommodated in the tubular structure 10 and entering the cutting unit 26 through the opening 44. These flow components can assist in flushing away cutting residues from the cutting region. Additionally, the cutting unit 26 may comprise a cutting residue collector 82, such as a magnet.

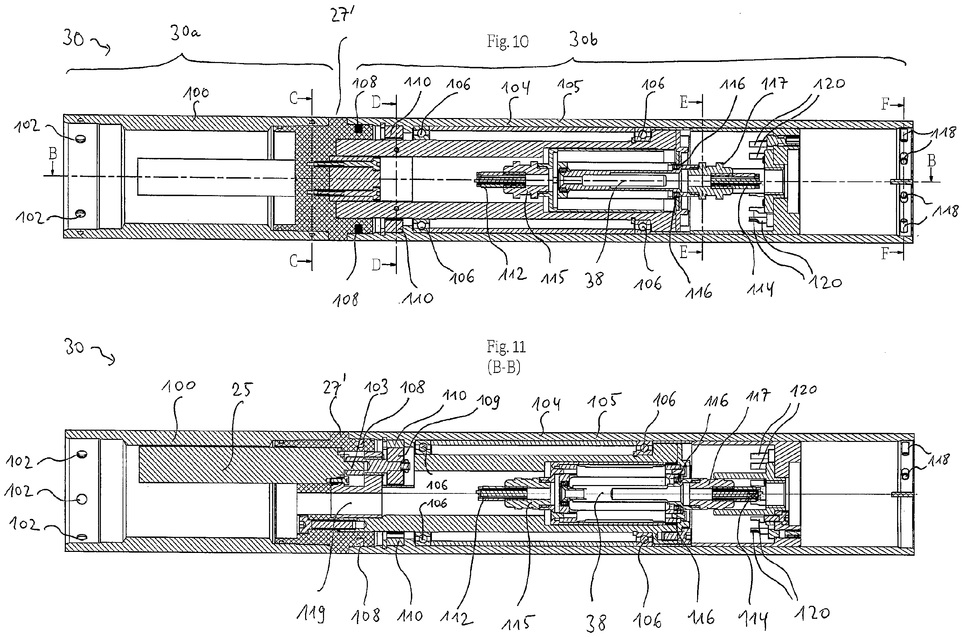

Referring to Figs. 10 to 15, the driving section 30 of the tubular cutting device 20 comprises a stationary part 100, formed as a stationary segment 30a, which is rotationally fixed with respect to the anchoring section 32. To this end, the stationary part 100 provides connection means 102 for fixedly connecting the stationary part 100 with the adjacent section. In this case, a coupling 27 (see Fig. 1) may be used for connecting the stationary part 100 of the driving section 30 to the anchoring section 32.

Furthermore, the driving section 30 comprises a rotary part 104, which is formed as a rotary segment 30b, and which is rotatably mounted to the stationary part 100, more specifically, to a coupling 27' fixed to the stationary part 100, e.g. by virtue of fixation means 118 engaging with connection means 102 (see section C-C in Fig. 10). The rotary part 104 comprises a rotatable outer wall 105 of the driving section 30, wherein the rotatable outer wall 105 forms a part of the housing of the tubular cutting device 20. The rotatable outer wall 105 is rotatably supported by ball bearings 106 and sealed by a sliding seal 108, which is inserted into the coupling 27'.

The rotary part 104 is driven by the first motor unit 25, which is formed as an electric motor and comprises an internal gearing (not shown), for example a planetary gear. The first motor unit 25 is fixedly connected to the stationary part 100. The output shaft 103 of the first motor unit 25 is coupled to a gear 109 engaging with a gear rim 110, which is attached to the rotatable outer wall 105 of the rotary part 104 (see section D-D in Fig. 11).

The driving section 30 further comprises a rotary electrical feedthrough 38, comprising first electrical connections 112 and second electrical connections 114, wherein the first and second electrical connections are electrically connected to each other and mechanically rotatable with respect to each other. The rotary electrical feedthrough 38 comprises two hull portions 115, 117 which hold the respective electric connections 112, 114, are mounted rotatable against each other with bearings 116, and are fixedly attached to stationary part 100 and rotary part 104, respectively.

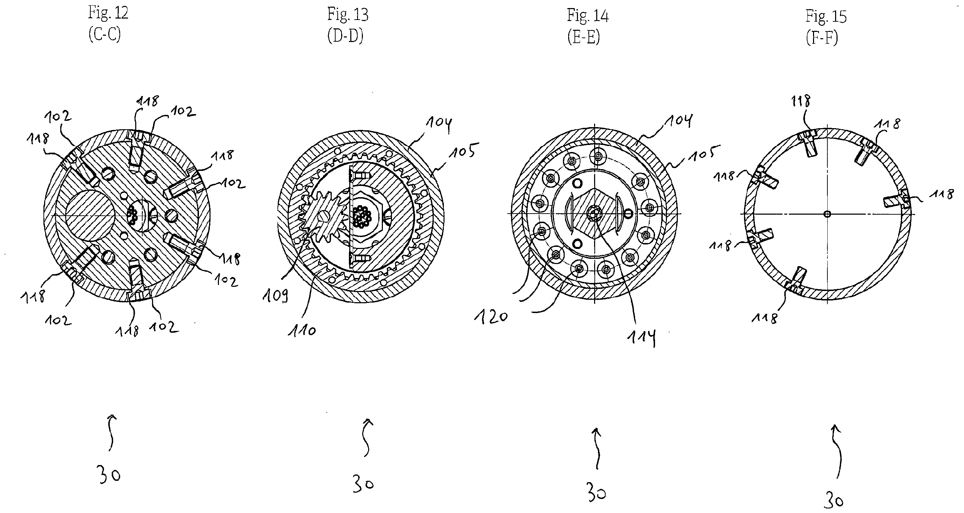

The first electrical connections 112 can be supplied with electricity, in this case by a cable (not shown) which may be led through the cable channel 119 within the stationary part 100. The second electrical connections 114, which rotate together with the rotary part 104, can be electrically connected with the cutting unit 26, in this case via connectors 120 (see section E-E in Fig. 12). The cutting unit 26 can be attached to the rotary part 104 using fixation means 118 (see section F-F in Fig. 13).

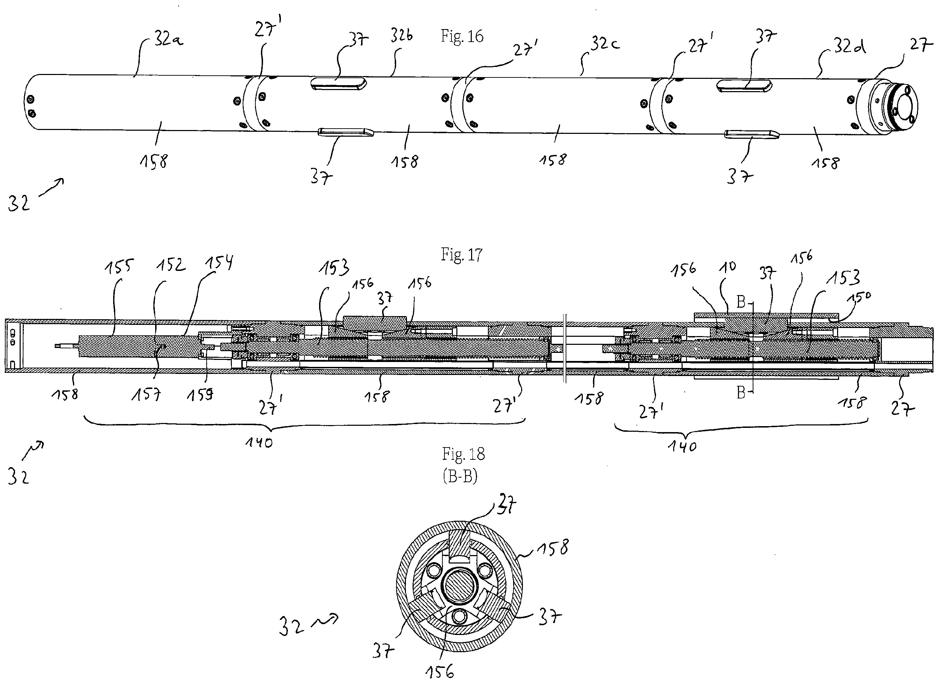

Referring to Figs. 16 to 18, the anchoring section 32 comprises an anchoring mechanism 140 for temporarily anchoring the tubular cutting device 20 to the inner surface 150 of the tubular structure 10. By anchoring the tubular cutting device 20, the device is locked against rotation and against longitudinal movement with respect to the tubular structure 10.

To ensure a stable anchoring, the anchoring section 32 comprises at least two longitudinally spaced regions with clamping jaws 37, in this case the segments 32b and 32d. Each of these regions comprises multiple, preferably at least three, clamping jaws 37, which are positioned angularly spaced within a circumferential tubular wall 158 (see section B-B in Fig. 18).

The anchoring mechanism 140 is driven by a fourth motor unit 152, which, in this case, comprises an electric motor 155 with a motor shaft 157 to which a gearing 154 is attached, for example a planetary gear. The fourth motor unit 152 is accommodated in an own segment 32a of the anchoring section. The output shaft 159 of the fourth motor unit 152 directly drives a threaded shaft 153, which longitudinally extends through at least a part of the anchoring section 32. In this case, the threaded shaft 153 extends through segment 32b, in which clamping jaws 37 are located, and is rotatably mounted within the couplings 27' for coupling the segment 32b to adjacent segments 32a, 32c. Similarly, a further threaded shaft 153 extends through segment 32d comprising clamping jaws 37. The threaded shaft 153 engages with longitudinally movable wedge-shaped elements 156 to radially extend the clamping jaws 37.

The clamping jaws 37, albeit in Fig. 17 drawn as radially partly within the interior of the circumferential tubular wall 158, may be positioned on a socket part (not shown), such that the clamping jaws 37 are radially completely outside the circumferential tubular wall 158, when clamped against the inner surface of the tubular structure 10. This may allow the clamping jaws 37 to be stripped off. Hence, the clamping jaws 37 may be adapted to be sheared off the socket part, in particular if retraction is not possible, e.g. due to a malfunction of the anchoring mechanism 140, the fourth motor unit 152 and/or a power cut. Generally, without limitation to the fourth motor unit 152, an emergency battery may be incorporated in the tubular cutting device 20 for protecting against a power cut.

## Claims

1. A tubular cutting device (20) for cutting a tubular structure (109) enclosing a hollow space from within the hollow space, wherein the tubular cutting device comprises
- a device body (24),
- a cutting unit (26) which is drivable to rotate relative to the device body and
- a cutting member (40) in the cutting unit which is drivable to rotate relative to the cutting unit,
**characterized in that**
the cutting unit and the cutting member are driven independently,
wherein the ratio of the cutting member rotation to the cutting unit rotation can be changed during operation of the tubular cutting device or during the cutting process,
wherein the cutting unit (26) defines a longitudinal axis (80) and wherein the cutting member (40) extends in a plane (83) having a normal (81) which is inclined with respect to the longitudinal axis (80) of the cutting unit (26).

2. The tubular cutting device (20) according to claim 1
comprising a first motor unit (25) for driving the cutting unit (26) and a second motor unit (41) for driving the cutting member (40); and
wherein the second motor unit (41) for driving the cutting member (40) is comprised by the cutting unit (26) and follows the rotation of the cutting unit relative to the device body (24).

3. The tubular cutting device according to one of claims 1 or 2, wherein the cutting unit (26) comprises a radial advancing mechanism (46) which is drivable to advance the cutting member (40) radially outwardly from the cutting unit for feeding the cutting member towards the tubular structure (10) for establishing a cutting contact of the cutting member with the tubular structure.

4. The tubular cutting device (20) according to claim 3 comprising a third motor unit (48) for driving the radial advancing mechanism (46) to advance the cutting member (40) radially outwardly from the cutting unit (26); and
wherein the third motor unit (48) for driving the radial advancing mechanism (46) is comprised by the cutting unit (26) and follows the rotation of the cutting unit relative to the device body (24).

5. The tubular cutting device (20) according to one of claims 2 to 4 comprising a rotary electrical feedthrough (38) for supplying the second motor unit (41) and/or the third motor unit (48) with electrical power during rotation of the cutting unit (26) relative to the device body (24).

6. The tubular cutting device (20) according to one of claims 2 to 5, wherein
- the first motor unit (25) directly drives the cutting unit (26) ,
- the second motor unit (41) directly drives the cutting member (40) and/or
- the third motor unit (48) directly drives the radial advancing mechanism (46).

7. The tubular cutting device (20) according to one of claims 1 to 6, wherein the tubular structure (10) has an inner surface (150) and wherein the tubular cutting device comprises an anchoring mechanism (140) for temporarily anchoring the device body (24) of the tubular cutting device to the inner surface of the tubular structure; and
comprising a fourth motor unit (152) for driving the anchoring mechanism (140).

8. The tubular cutting device (20) according to claim 7, wherein the anchoring mechanism (140) comprises clamping jaws (37),
- wherein the clamping jaws are extendable radially outwardly for clamping the clamping jaws against the inner surface (150) of the tubular structure (10) for locking the tubular cutting device and
- wherein the clamping jaws are retractable radially inwardly for releasing the clamping jaws from the inner surface of the tubular structure for enabling longitudinal movement of the tubular cutting device along the tubular structure.

9. The tubular cutting device (20) according to claim 8, wherein the clamping jaws (37) or parts thereof are adapted to be stripped off to release the anchoring of the tubular cutting device in case of a malfunction of the anchoring mechanism (140).

10. The tubular cutting device (20) according to one of the claims 1 to 9, **characterized in that**
the cutting member (40) is rotatable about a rotation axis (59) and wherein the normal (81) of the plane (83) defined by the cutting member is inclined with respect to the rotation axis of the cutting member.

11. The tubular cutting device (20) according to claim 10, wherein
- the rotation axis is inclined with respect to the longitudinal axis (80) of the cutting unit,
- the normal (81) of the plane (83) of the cutting member (40) is inclined with respect to the longitudinal axis (80) of the cutting unit with an inclination angle between 0.2 and 10 degrees,
- the rotation axis (59) of the cutting member is inclined with respect to the longitudinal axis of the cutting unit with an inclination angle between 0.2 and 10 degrees, and/or
- the rotation axis (59) of the cutting member (40) is inclined with respect to the normal (81) of the plane (83) of the cutting member with an inclination angle between 0.2 and 10 degrees.

12. The tubular cutting device (20) according to one of claims 10 or 11 comprising a housing (45) having a circumferential tubular wall (78), which includes an opening (45) through which the cutting member (40) is advanced partially outside the circumferential tubular wall by the radial advancing mechanism (46), wherein the opening has an angular extension which is limited to an angle of less than 360 degrees.

13. The tubular cutting device (20) according to claim 12, wherein the cutting member (40) substantially has the form of a circular disc with a diameter between 40 and 70 percent of the outer diameter of the tubular wall (78) of the housing (45); and/or
wherein the cutting member (40) is formed as a saw blade, a milling blade, a grinding wheel, or a combination thereof.

14. A cutting method for cutting a tubular structure (10) which extends along a tubular extension direction and encloses a hollow space accommodating a fluid, the method comprising the steps of:
- providing a tubular cutting device (20) according to one of the claims 1 to 13,
- introducing the tubular cutting device into the hollow space enclosed by the tubular structure,
- positioning the tubular cutting device within the hollow space at a desired position along the tubular extension direction of the tubular structure,
- anchoring the device body of the tubular cutting device to the tubular structure at the desired position,
- rotating the cutting member relative to the cutting unit,
- advancing the cutting member radially outwardly from the cutting unit and independently from the rotating movement of the cutting member to feed the cutting member towards the tubular structure and to establish a cutting contact of the cutting member with the tubular structure,
- rotating the cutting unit relative to the device body of the tubular cutting device and independent from the rotating movement of the cutting member as well as from the advancing movement of the cutting member, thereby cutting the tubular structure circumferentially, **characterized in that**
- a cutting groove is cut by means of rotating the cutting unit relative to the device body of the tubular cutting device,
- wherein the ratio of the cutting member rotation to the cutting unit rotation can be changed during operation of the tubular cutting device or during the cutting process,
- retracting the cutting member radially inwardly to draw back the cutting member from the tubular structure in the cutting unit.

15. The cutting method according to claim 14, comprising the step of continuing the rotation of the cutting unit (26) relative to the device body (24) for several revolutions while maintaining the cutting contact of the cutting member (40) with the tubular structure (10) and while gradually further advancing the cutting member radially outwardly from the cutting unit to spirally cut the tubular structure; and/or
wherein the tubular structure (10) is cut until the tubular structure is circumferentially completely severed in separate parts.

## Patentansprüche

1. Rohrschneidevorrichtung (20) zum Schneiden einer rohrförmigen Struktur (109), die einen Hohlraum umschließt, von innerhalb des Hohlraums, wobei die Rohrschneidevorrichtung aufweist:
- einen Vorrichtungskörper (24),
- eine Schneideinheit (26), die antreibbar ist, um sich relativ zu dem Vorrichtungskörper zu drehen, und
- ein Schneidelement (40) in der Schneideinheit, das
antreibbar ist, um sich relativ zu der Schneideinheit zu drehen,
**dadurch gekennzeichnet, dass**
die Schneideinheit und das Schneidelement unabhängig angetrieben werden,
wobei das Verhältnis der Schneidelementdrehung zu der Schneideinheitsdrehung während des Betriebs der Rohrschneidevorrichtung oder während des Schneideprozesses verändert werden kann,
wobei die Schneideinheit (26) eine Längsachse (80) definiert und wobei das Schneidelement (40) in einer Ebene (83) mit einer Normalen (81) verläuft, die in Bezug auf die Längsachse (80) der Schneideinheit (26) geneigt ist.

2. Rohrschneidevorrichtung (20) nach Anspruch 1,
aufweisend eine erste Motoreinheit (25) zum Antreiben der Schneideinheit (26) und eine zweite Motoreinheit (41) zum Antreiben des Schneidelements (40); und
wobei die zweite Motoreinheit (41) zum Antreiben des Schneidelements (40) von der Schneideinheit (26) aufgewiesen wird und der Drehung der Schneideinheit relativ zu dem Vorrichtungskörper (24) folgt.

3. Rohrschneidevorrichtung nach einem der Ansprüche 1 oder 2, wobei die Schneideinheit (26) einen Radialvorschubmechanismus (46) aufweist, der antreibbar ist, um das Schneidelement (40) von der Schneideinheit radial nach außen vorzubewegen, um das Schneidelement hin zu der rohrförmigen Struktur (10) zuzuführen, um einen Schneidkontakt des Schneidelements mit der rohrförmigen Struktur herzustellen.

4. Rohrschneidevorrichtung (20) nach Anspruch 3,
aufweisend eine dritte Motoreinheit (48) zum Antreiben des Radialvorschubmechanismus (46), um das Schneidelement (40) von der Schneideinheit (26) radial nach außen vorzuschieben; und
wobei die dritte Motoreinheit (48) zum Antreiben des Radialvorschubmechanismus (46) von der Schneideinheit (26) aufgewiesen wird und der Drehung der Schneideinheit relativ zu dem Vorrichtungskörper (24) folgt.

5. Rohrschneidevorrichtung (20) nach einem der Ansprüche 2 bis 4, aufweisend eine rotatorische elektrische Durchführung (38) zur Versorgung der zweiten Motoreinheit (41) und/oder der dritten Motoreinheit (48) mit elektrischer Energie während der Drehung der Schneideinheit (26) relativ zu dem Vorrichtungskörper (24).

6. Rohrschneidevorrichtung (20) nach einem der Ansprüche 2 bis 5, wobei
- die erste Motoreinheit (25) direkt die Schneideinheit (26) antreibt,
- die zweite Motoreinheit (41) direkt das Schneidelement (40) antreibt, und/oder
- die dritte Motoreinheit (48) direkt den Radialvorschubmechanismus (46) antreibt.

7. Rohrschneidevorrichtung (20) nach einem der Ansprüche 1 bis 6, wobei die rohrförmige Struktur (10) eine Innenfläche (150) aufweist und wobei die Rohrschneidevorrichtung einen Verankerungsmechanismus (140) zum vorübergehenden Verankern des Vorrichtungskörpers (24) der Rohrschneidevorrichtung an der Innenfläche der rohrförmigen Struktur aufweist; und
aufweisend eine vierte Motoreinheit (152) zum Antreiben des Verankerungsmechanismus (140).

8. Rohrschneidevorrichtung (20) nach Anspruch 7, wobei der Verankerungsmechanismus (140) Klemmbacken (37) aufweist,
- wobei die Klemmbacken radial nach außen ausfahrbar sind, um die Klemmbacken gegen die Innenfläche (150) der rohrförmigen Struktur (10) zu klemmen, um die Rohrschneidevorrichtung zu verriegeln, und
- wobei die Klemmbacken radial nach innen zurückziehbar sind, um die Klemmbacken von der Innenfläche der rohrförmigen Struktur zu lösen, um Längsbewegung der Rohrschneidevorrichtung entlang der rohrförmigen Struktur zu ermöglichen.

9. Rohrschneidevorrichtung (20) nach Anspruch 8, wobei die Klemmbacken (37) oder Teile davon eingerichtet sind, abgestreift zu werden, um im Falle einer Fehlfunktion des Verankerungsmechanismus (140) die Verankerung der Rohrschneidevorrichtung zu lösen.

10. Rohrschneidevorrichtung (20) nach einem der Ansprüche 1 bis 9, **dadurch gekennzeichnet, dass**
das Schneidelement (40) um eine Drehachse (59) drehbar ist, und wobei die Normale (81) der Ebene (83), die durch das Schneidelement definiert ist, in Bezug auf die Drehachse des Schneidelements geneigt ist.

11. Rohrschneidevorrichtung (20) nach Anspruch 10, wobei
- die Drehachse in Bezug auf die Längsachse (80) der Schneideinheit geneigt ist,
- die Normale (81) der Ebene (83) des Schneidelements (40) in Bezug auf die Längsachse (80) der Schneideinheit mit einem Neigungswinkel zwischen 0,2 und 10 Grad geneigt ist,
- die Drehachse (59) des Schneidelements in Bezug auf die Längsachse der Schneideinheit mit einem Neigungswinkel zwischen 0,2 und 10 Grad geneigt ist, und/oder
- die Drehachse (59) des Schneidelements (40) in Bezug auf die Normale (81) der Ebene (83) des Schneidelements mit einem Neigungswinkel zwischen 0,2 und 10 Grad geneigt ist.

12. Rohrschneidevorrichtung (20) nach einem der Ansprüche 10 oder 11, aufweisend ein Gehäuse (45) mit einer umlaufenden Rohrwand (78), die eine Öffnung (45) aufweist, durch die das Schneidelement (40) durch den Radialvorschubmechanismus (46) teilweise nach außerhalb der umlaufenden Rohrwand vorgeschoben wird, wobei die Öffnung eine Winkelerstreckung aufweist, die auf einen Winkel von weniger als 360 Grad begrenzt ist.

13. Rohrschneidevorrichtung (20) nach Anspruch 12, wobei das Schneidelement (40) im Wesentlichen die Form einer kreisförmigen Scheibe mit einem Durchmesser zwischen 40 und 70 Prozent des Außendurchmessers der Rohrwand (78) des Gehäuses (45) aufweist; und/oder
wobei das Schneidelement (40) als Sägeblatt, Fräsklinge, Schleifrad, oder eine Kombination davon ausgebildet ist.

14. Schneidverfahren zum Schneiden einer rohrförmigen Struktur (10), die sich entlang einer Rohrerstreckungsrichtung erstreckt und einen Hohlraum umschließt, der ein Fluid aufnimmt, wobei das Verfahren die folgenden Schritte umfasst:
- Bereitstellen einer Rohrschneidevorrichtung (20) nach einem der Ansprüche 1 bis 13,
- Einführen der Rohrschneidevorrichtung in den von der rohrförmigen Struktur umschlossenen Hohlraum,
- Positionieren der Rohrschneidevorrichtung innerhalb des Hohlraums an einer gewünschten Position entlang der Rohrerstreckungsrichtung der rohrförmigen Struktur,
- Verankern des Vorrichtungskörpers der Rohrschneidevorrichtung an der rohrförmigen Struktur an der gewünschten Position,
- Drehen des Schneidelements relativ zu der Schneideinheit,
- Vorschieben des Schneidelements radial nach außen von der Schneideinheit und unabhängig von der Drehbewegung des Schneidelements, um das Schneidelement hin zu der rohrförmigen Struktur zuzuführen und um einen Schneidkontakt des Schneidelements mit der rohrförmigen Struktur herzustellen,
- Drehen der Schneideinheit relativ zu dem Vorrichtungskörper der Rohrschneidevorrichtung und unabhängig von der Drehbewegung des Schneidelements sowie von der Vorwärtsbewegung des Schneidelements, wodurch die rohrförmige Struktur umlaufend geschnitten wird,
**dadurch gekennzeichnet, dass**
- eine Schnittfuge vermittels des Drehens der Schneideinheit relativ zu dem Vorrichtungskörper der Rohrschneidevorrichtung geschnitten wird,
- wobei das Verhältnis der Schneidelementdrehung zu der Schneideinheitsdrehung während des Betriebs der Rohrschneidevorrichtung oder während des Schneidprozesses verändert werden kann,
- Zurückziehen des Schneidelements radial nach innen, um das Schneidelement aus der rohrförmigen Struktur in der Schneideinheit zurückzuziehen.

15. Schneidverfahren nach Anspruch 14, umfassend den Schritt des Fortsetzens der Drehung der Schneideinheit (26) relativ zu dem Vorrichtungskörper (24) um mehrere Umdrehungen, während der Schneidkontakt des Schneidelements (40) mit der rohrförmigen Struktur (10) aufrechterhalten wird und während das Schneidelement schrittweise weiter radial nach außen von der Schneideinheit vorgeschoben wird, um die rohrförmige Struktur spiralförmig zu schneiden; und/oder wobei die rohrförmige Struktur (10) geschnitten wird, bis die rohrförmige Struktur umlaufend vollständig in einzelne Teile durchtrennt ist.

## Revendications

1. Dispositif de découpe tubulaire (20) pour découper une structure tubulaire (109) enfermant un espace creux de l'intérieur de l'espace creux, dans lequel le dispositif de découpe tubulaire comprend
- un corps de dispositif (24),
- une unité de découpe (26), qui peut être entraînée en rotation par rapport au corps de dispositif, et
- un élément de découpe (40) dans l'unité de découpe, qui peut être entraîné en rotation par rapport à l'unité de découpe,
**caractérisé en ce que**
l'unité de découpe et l'élément de découpe sont entraînés indépendamment,
dans lequel le rapport entre la rotation de l'élément de découpe et la rotation de l'unité de découpe peut être modifié pendant le fonctionnement du dispositif de découpe tubulaire ou pendant le processus de découpe,
dans lequel l'unité de découpe (26) définit un axe longitudinal (80) et dans lequel l'élément de découpe (40) s'étend dans un plan (83) présentant une normale (81) qui est inclinée par rapport à l'axe longitudinal (80) de l'unité de découpe (26).

2. Dispositif de découpe tubulaire (20) selon la revendication 1 comprenant une première unité de moteur (25) pour entraîner l'unité de découpe (26) et une deuxième unité de moteur (41) pour entraîner l'élément de découpe (40) ; et
dans lequel la deuxième unité de moteur (41) pour entraîner l'élément de découpe (40) est comprise par l'unité de découpe (26) et suit la rotation de l'unité de découpe par rapport au corps du dispositif (24).

3. Dispositif de découpe tubulaire selon l'une quelconque des revendications 1 ou 2, dans lequel l'unité de découpe (26) comprend un mécanisme d'avancement radial (46), qui peut être entraîné pour faire avancer l'élément de découpe (40) vers l'extérieur radialement depuis l'unité de découpe pour amener l'élément de découpe vers la structure tubulaire (10) pour établir un contact de découpe entre l'élément de découpe et la structure tubulaire.

4. Dispositif de découpe tubulaire (20) selon la revendication 3, comprenant une troisième unité de moteur (48) pour entraîner le mécanisme d'avancement radial (46) pour faire avancer l'élément de découpe (40) vers l'extérieur radialement depuis l'unité de découpe (26) ; et
dans lequel la troisième unité de moteur (48) pour entraîner le mécanisme d'avancement radial (46) est comprise par l'unité de découpe (26) et suit la rotation de l'unité de découpe par rapport au corps de dispositif (24).

5. Dispositif de découpe tubulaire (20) selon l'une quelconque des revendications 2 à 4, comprenant un passage électrique rotatif (38) pour alimenter la deuxième unité de moteur (41) et/ou la troisième unité de moteur (48) en énergie électrique pendant la rotation de l'unité de découpe (26) par rapport au corps de dispositif (24).

6. Dispositif de découpe tubulaire (20) selon l'une quelconque des revendications 2 à 5, dans lequel
- la première unité de moteur (25) entraîne directement l'unité de découpe (26),
- la deuxième unité de moteur (41) entraîne directement l'élément de découpe (40), et/ou
- la troisième unité de moteur (48) entraîne directement le mécanisme d'avancement radial (46).

7. Dispositif de découpe tubulaire (20) selon l'une quelconque des revendications 1 à 6, dans lequel la structure tubulaire (10) présente une surface intérieure (150) et dans lequel le dispositif de découpe tubulaire comprend un mécanisme d'ancrage (140) pour ancrer temporairement le corps de dispositif (24) du dispositif de découpe tubulaire à la surface intérieure de la structure tubulaire ; et
comprenant une quatrième unité de moteur (152) pour entraîner le mécanisme d'ancrage (140).

8. Dispositif de découpe tubulaire (20) selon la revendication 7, dans lequel le mécanisme d'ancrage (140) comprend des mâchoires de serrage (37),
- dans lequel les mâchoires de serrage sont extensibles vers l'extérieur radialement pour serrer les mâchoires de serrage contre la surface intérieure (150) de la structure tubulaire (10) pour verrouiller le dispositif de découpe tubulaire, et
- dans lequel les mâchoires de serrage peuvent être rétractées vers l'intérieur radialement pour relâcher les mâchoires de serrage depuis la surface intérieure de la structure tubulaire pour permettre le déplacement longitudinal du dispositif de découpe tubulaire le long de la structure tubulaire.

9. Dispositif de découpe tubulaire (20) selon la revendication 8, dans lequel les mâchoires de serrage (37) ou des pièces de celles-ci sont adaptées pour être retirées pour relâcher l'ancrage du dispositif de découpe tubulaire dans le cas d'un dysfonctionnement du mécanisme d'ancrage (140)

10. Dispositif de découpe tubulaire (20) selon l'une quelconque des revendications 1 à 9, **caractérisé en ce que**
l'élément de découpe (40) peut être tourné autour d'un axe de rotation (59) et dans lequel la normale (81) du plan (83) défini par l'élément de découpe est inclinée par rapport à l'axe de rotation de l'élément de découpe.

11. Dispositif de découpe tubulaire (20) selon la revendication 10, dans lequel
- l'axe de rotation est incliné par rapport à l'axe longitudinal (80) de l'unité de découpe,
- la normale (81) du plan (83) de l'élément de découpe (40) est inclinée par rapport à l'axe longitudinal (80) de l'unité de découpe avec un angle d'inclinaison entre 0,2 et 10 degrés,
- l'axe de rotation (59) de l'élément de découpe est incliné par rapport à l'axe longitudinal de l'unité de découpe avec un angle d'inclinaison entre 0,2 et 10 degrés, et/ou
- l'axe de rotation (59) de l'élément de découpe (40) est incliné par rapport à la normale (81) du plan (83) de l'élément de découpe avec un angle d'inclinaison entre 0,2 et 10 degrés.

12. Dispositif de découpe tubulaire (20) selon l'une quelconque des revendications 10 ou 11 comprenant un boîtier (45) présentant une paroi tubulaire circonférentielle (78), qui comporte une ouverture (45) par laquelle l'élément de découpe (40) est avancé en partie à l'extérieur de la paroi tubulaire circonférentielle par le mécanisme d'avancement radial (46), dans lequel l'ouverture présente une extension angulaire qui est limitée à un angle inférieur à 360 degrés.

13. Dispositif de découpe tubulaire (20) selon la revendication 12, dans lequel l'élément de découpe (40) présente sensiblement la forme d'un disque circulaire avec un diamètre entre 40 et 70 % du diamètre extérieur de la paroi tubulaire (78) du boîtier (45) ; et/ou dans lequel l'élément de découpe (40) est formé comme une lame de scie, une lame de fraisage, une meule ou une combinaison de celles-ci.

14. Procédé de découpe pour découper une structure tubulaire (10) qui s'étend le long d'une direction d'extension tubulaire et enferme un espace creux logeant un fluide, le procédé comprenant les étapes :
- de fourniture d'un dispositif de découpe (20) selon l'une quelconque des revendications 1 à 13,
- d'introduction du dispositif de découpe tubulaire dans l'espace creux enfermé par la structure tubulaire,
- de positionnement du dispositif de découpe tubulaire à l'intérieur de l'espace creux sur une position souhaitée le long de la direction d'extension tubulaire de la structure tubulaire,
- d'ancrage du corps de dispositif du dispositif de découpe tubulaire sur la structure tubulaire sur la position souhaitée,
- de rotation de l'élément de découpe par rapport à l'unité de découpe,
- d'avancement de l'élément de découpe vers l'extérieur radialement depuis l'unité de découpe et indépendamment du déplacement de rotation de l'élément de découpe pour amener l'élément de découpe vers la structure tubulaire et pour établir un contact de découpe entre l'élément de découpe et la structure tubulaire,
- de rotation de l'unité de découpe par rapport au corps de dispositif de découpe tubulaire et indépendamment du déplacement de rotation de l'élément de découpe ainsi que du déplacement d'avancement de l'élément de découpe, découpant ainsi la structure tubulaire de manière circonférentielle,
**caractérisé en ce que**
- une rainure de découpe est découpée au moyen de la rotation de l'unité de découpe par rapport au corps de dispositif du dispositif de découpe tubulaire,
- dans lequel le rapport entre la rotation de l'élément de découpe et la rotation de l'unité de découpe peut être modifié pendant le fonctionnement du dispositif de découpe tubulaire ou pendant le processus de découpe,
- la rétractation de l'élément de découpe vers l'intérieur radialement pour tirer l'élément de découpe de la structure tubulaire dans l'unité de découpe.

15. Procédé de découpe selon la revendication 14, comprenant l'étape de poursuite de la rotation de l'unité de découpe (26) par rapport au corps de dispositif (24) pendant plusieurs tours tout en maintenant le contact de découpe entre l'élément de découpe (40) et la structure tubulaire (10) et tout en avançant en outre progressivement l'élément de découpe vers l'extérieur radialement depuis l'unité de découpe pour découper en spirale la structure tubulaire ; et/ou
dans lequel la structure tubulaire (10) est découpée jusqu'à ce que la structure tubulaire soit totalement sectionnée de manière circonférentielle en des pièces séparées.
